# EUROPÄISCHE PATENTSCHRIFT

(11) **EP 2 687 075 B1**
(45) Veröffentlichungstag und Bekanntmachung des Hinweises auf die Patenterteilung: **03.07.2019**
(21) Anmeldenummer: 13405052.5
(22) Anmeldetag: 06.05.2013
(51) Int. Cl.: A01C 3/06

(54) **EINRICHTUNG ZUR VERTEILUNG VON STREUFÄHIGEM GUT**
DEVICE FOR DISTRIBUTING SPREADABLE GOODS
DISPOSITIF POUR LA DISTRIBUTION DE PRODUITS D'ÉPANDAGE

(30) Priorität: 16.07.2012 CH 10822012
(43) Veröffentlichungstag der Anmeldung: 22.01.2014
(73) Patentinhaber: Gafner Maschinenfabrik AG, 8637 Laupen (CH)
(72) Erfinder: Gafner, Matthias, 8636 Wald (CH)
(74) Vertreter: Fenner, Werner

(56) Entgegenhaltungen:
- EP-A1- 2 243 345
- CH-A5- 683 058
- DE-U1- 9 312 123

## Beschreibung

Die Erfindung betrifft eine Einrichtung zur Verteilung von streufähigem Gut, insbesondere Mist, Kompost, Düngemittel oder Abfälle aus pflanzlichen Stoffen, bestehend aus einer auf einem Fahrgestell befestigbaren und einen Laderaum für das Gut bildenden Wanne, die entlang eines Wannenbodens eine das Gut gegen eine ein Ende des Laderaumes bildende, seitlich aus der Wanne fördernde Austragseinrichtung schiebende Fördervorrichtung aufweist, wobei die Austragseinrichtung wenigstens eine dem Gut zur Aufbereitung zugewandte, umlaufend angetriebene Zerkleinerungsvorrichtung und eine dieser nachgeschaltete, quer zur Fortbewegungsrichtung des Fahrgestells wirkende Auswurfvorrichtung aufweist.

Solche Einrichtungen sind auf einem Fahrgestell eines selbstfahrenden Transportfahrzeug oder von einem Traktor oder dgl. gezogenen Fahrgestell aufgebaut und befestigt, wobei die selbstfahrenden Transportfahrzeuge oder die gezogenen Fahrzeuge oft zum Austausch anderer aufbaubarer Einrichtungen ausgebildet sind. Es wird auf einen Prospekt der Gesuchstellerin "gafner Der Streuer" herausgegeben Januar 2012, verwiesen.

Einrichtungen der eingangs beschriebenen Art sind durch die CH-Patente 683058 A5, 691788 A5 und 692593 A5 bekannt.

Die mit dem Laderaum förderwirksam und an einem Ende der das Gut aufnehmenden Wanne verbundene Austragseinrichtung erfordert zur Pflege und zum Unterhalt, insbesondere zum Austausch der Verschleissteile wie Messer, Förder- und Führungselemente eine bessere Zugänglichkeit, die insbesondere aufgrund des relativ hohen Gewichtes der Austragseinrichtung bisher mit konstruktiven Mitteln nicht erkannt worden ist.

Daraus hat sich an die vorliegende Erfindung die Aufgabe gestellt, eine Einrichtung nach der eingangs beschriebenen Art zu schaffen, dass durch eine einfache Zugänglichkeit zu der Austragseinrichtung die Reinigung und Pflege, insbesondere der Unterhalt und die Austauschbarkeit von Austrags-, Antriebs- und Verschleissteilen verbessert werden kann.

Die vorveröffentlichte DE 93 12 123 U1 betrifft eine fahrbare Streuvorrichtung, insbesondere ein Mist- und Kompoststreuer, insbesondere mit einer Zuführvorrichtung für das Streugut aus der Wanne. Diese Streuvorrichtung weist eine ähnliche Problematik auf.

Erfindungsgemäss wird die Aufgabe dadurch gelöst, dass ein die Austragseinrichtung tragendes Gestell durch eine an der Seitenwand der Wanne um eine etwa senkrecht angeordnete Drehachse von der Wanne trennbar ist, wobei das Gestell resp. das Gehäuse einen angebauten Flansch aufweist, der im Betriebszustand der Einrichtung mit einem an dem Wannenende befestigten Gegenflansch lösbar verbunden ist und der angebaute Flansch und der Gegenflansch durch ein die Drehachse bildendes Scharnier verbunden ist.

Auch die Zugänglichkeit des Laderaumes resp. der Wanne wird damit verbessert, wobei der nachhaltige Unterhalt sowohl bei auf ein Fahrgestell aufgebauter Einrichtung wie auch bei vom Fahrgestell abgehobener Einrichtung vorteilhaft durchgeführt wieder an die Wanne zurückgeschoben werden kann.

Auch die Zugänglichkeit des Laderaumes resp. der Wanne wird damit verbessert, wobei der nachhaltige Unterhalt sowohl bei auf ein Fahrgestell aufgebauter Einrichtung wie auch bei vom Fahrgestell abgehobener Einrichtung vorteilhaft durchgeführt werden kann.

Vorzugsweise ist das Gestell als Gehäuse der Austragseinrichtung ausgebildet, sodass eine kompakte Bauweise entstehen kann.

Eine einfache Trennung der Austragseinrichtung von der Wanne wird dadurch erzielt, dass das Gestell im Seitenwandbereich der Wanne um eine etwa senkrechte Drehachse schwenkbar ausgebildet ist. Diese Ausbildung gewährt eine optimale Zugänglichkeit zu der Austragseinrichtung sowohl an deren Innenseite wie auch an der Aussenseite, in Fortbewegungsrichtung des Fahrzeuges betrachtet.

Selbstverständlich ist es möglich, die senkrechte Drehachse auf der in Fortbewegungsrichtung eines Fahrzeuges linken oder rechten Seite der Wanne resp. des Fahrgestells anzubringen.

Die Drehachse könnte nicht erfindungsgemäß horizontal angeordnet sein, jedoch würde eine solche Anordnungsweise die Zugänglichkeit nur mässig verbessern.

Eine andere nicht unter die Erfindung fallende Ausführungsform könnte eine Trennung von Austragseinrichtung und Wanne bewirken, wenn die Austragseinrichtung durch Verschiebebewegungen von der Wanne getrennt und wieder zugestellt werden kann.

Vorteilhaft erweist sich die Erfindung, wenn das Gestell im Seitenwandbereich der Wanne um eine etwa senkrechte Drehachse schwenkbar ausgebildet ist, die auch den Zugang zur Wanne resp. in den Laderaum und zur Fördervorrichtung erheblich verbessert.

Der einfachheithalber ist an dem Gestell ein angebauter Flansch (Anbauflansch) befestigt resp. mit ersterem verbunden, der im Betriebszustand der Einrichtung resp. der Wanne mit einem an dem Wannenende befestigten Gegenflansch lösbar verbunden ist und auf diese Weise eine hohe Stabilität und Verschlusssicherheit gewährleistet.

Vorzugsweise sind Anbauflansch und Gegenflansch durch ein die Drehachse bildendes Scharnier verbunden, sodass ein einfaches Öffnen des Laderaumes resp. Trennen der Austragseinrichtung von dem Laderaum möglich wird.

Vorteilhaft sind die Flansche nach dem Wannen- resp. Laderaumquerschnitt und geschlossen ausgebildet, sodass eine hohe Stabilität sowohl auf das Wannenende als auch auf das Gestell übertragen werden kann.

Es eignet sich eine selbsttragend wirkende, geschlossene Konstruktion für die Flansche, sodass eine form- und/oder kraftschlüssige Verbindung beim Zusammenschluss entsteht.

Das Scharnier bedarf einer Robusten Ausführung, wozu an der Drehachse wenigstens zwei beabstandete, aus Kloben- und Drehband sowie Aufsteckwelle gebildete Drehlager vorgesehen sind.

Austragseinrichtung und Wanne sind im Betriebszustand durch die Flansche form- und/oder kraftschlüssig verbunden, sodass eine selbsttragende Verbindung entsteht, die eine hohe Stabilität auf die beteiligten Maschinen- und Fahrzeugteile überträgt.

Der formschlüssige Verbund der Flansche kann durch einen kragenartigen Aufsatz an wenigstens einem Flansch gebildet sein, derart, dass der Kragen des Flansches den anderen Flansch wenigsten teilweise durchsetzt.

Zweckmässig hat das Gehäuse der Austragseinrichtung einen zum Laderaum hin gerichteten Verbindungsraum zur Aufbereitung resp. Zerkleinerung des Guts, der etwa an die Querschnittsform des Laderaumes der Wanne angepasst ist.

Es erweist sich als vorteilhaft, wenn die von der Wanne getrennte Austragseinrichtung am Boden abstützbar ausgebildet ist.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung einer Ausführung nach der erfindungsgemässen Einrichtung mit einer von einer aufbaubaren Wanne getrennten Austragseinrichtung,
- Fig. 2: eine räumliche Darstellung der in Fig. 1 gezeigten Einrichtung, bei welcher die Austragseinrichtung mit der Wanne betriebsbereit verbunden ist,
- Fig. 3: eine räumliche Darstellung der von einem Fahrgestell abgehobenen Wanne,
- Fig. 4: eine räumliche Darstellung der von der Wanne oder dem Fahrgestell getrennten Austragseinrichtung und
- Fig. 5: eine räumliche Darstellung der von dem Fahrgestell resp. der Wanne getrennten, durch ein Scharnier verbundenen Verbindungsflansche.

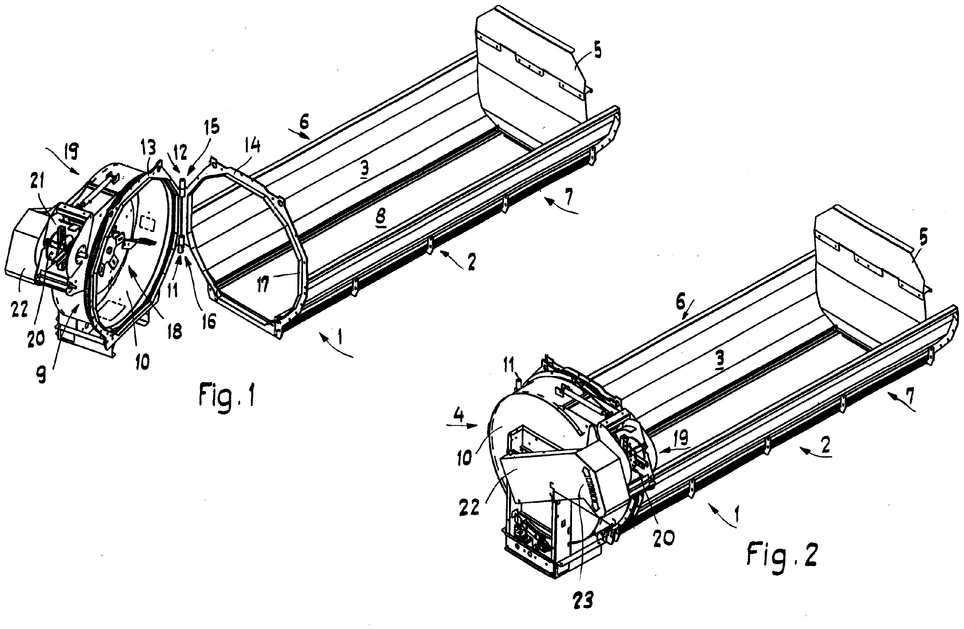

Die Fig. 1 und 2 zeigen unterschiedliche Betriebszustände einer auf ein selbstfahrendes oder gezogenes Fahrgestell aufbaubaren Einrichtung 1 zur Verteilung von streufähigem Gut, wie Mist, Kompost, Düngemittel oder Abfälle aus pflanzlichen Stoffen, wie sie vornehmlich in der Landwirtschaft, im Garten- und Anlagenbau oder der Verarbeitung anfallen. Die Einrichtung besteht aus einer auf einem nicht dargestellten Fahrgestell aufgebauten und befestigten Wanne 2, die einen Laderaum 3 für das auf Felder oder Äcker verteilt auszutragende Gut bildet. Die Wanne 2 weist an einem Ende der Wanne 2 eine Austragseinrichtung 4 und an dem in Fortbewegungsrichtung der Einrichtung 1 gegenüberliegenden Ende eine Laderaumwand resp. Schiebewand 5 auf. Die Seitenwände 6, 7 der Wanne 2 haben eine vom seitlichen Ende des Wannenbodens 8 hochstehende und nach aussen gekrümmt verlaufende Form und sind aus Metall hergestellt. Die Laderaumwand 5 ist als Schiebewand ausgebildet und von einem umlaufenden Kettenantrieb (nicht sichtbar) zu dem der Austragseinrichtung 4 zugeordneten Ende des Laderaumes 3 und zurück in die Ausgangsposition bewegbar angetrieben.
Anstelle einer Schiebewand 5 könnte auch eine stationäre Wand an dem von der Austragseinrichtung 4 gegenüberliegenden Ende der Wanne 2 und ein entlang des Wannenbodens 8 angetriebener Kratzboden als Fördervorrichtung vorgesehen werden.
Die Fig. 1 zeigt die Austragseinrichtung 4 in einem Ausserbetriebsposition, in der sie von der Wanne 2 durch eine Schwenkbewegung von der Betriebsposition getrennt ist. Zu diesem Zweck ist ein die Austragseinrichtung 4 tragendes Gestell 9, das als Gehäuse 10 zum Schutz der Austragseinrichtung 4 ausgebildet ist, am Ende der Seitenwand 6 schenkbar befestigt, wozu ein um eine senkrechte Drehachse 12 angeordnetes Scharnier 11 vorgesehen ist. An dem Gestell 9 bzw. der Austragseinrichtung resp. dem Gehäuse 10 bzw. Rahmen ist ein Flansch 13 angebaut resp. befestigt, der im Betriebszustand der Einrichtung 1 gemäss Fig. 2 mit einem am Wannenende befestigten Gegenflansch 14 lösbar verbunden ist. Dieser Betriebszustand kann durch Schrauben oder Schrauben und Muttern oder geeignete Verschlüsse (nicht dargestellt) an den Flanschen 13, 14 erreicht werden. Der bewegliche Flansch 13 und der an der Wanne 2 befestigte, mit dem Fahrgestell verbundene Gegenflansch 14 sind durch das Scharnier 11 verbunden resp. bei von der Wanne 2 getrennter Position der Austragseinrichtung 4 hängt letztere mittels Scharnier 11 frei an der Wanne 2 resp. einem nicht dargestellten Fahrgestell.
Das Scharnier 11 besteht aus zwei beabstandeten Drehlagern 15, 16, die wanneseitig aus einem Kloben resp. Klobenband und einem an einer die Kloben durchsetzenden Welle aufgesteckten, an dem Gestell 9 der Austragseinrichtung 4 befestigten Drehband.
Für eine formschlüssige Verbindung im Betriebszustand der Einrichtung 1 sind die Flansche 13, 14 resp. wenigstens ein Flansch 13, 14 mit einem kragenartig abstehenden Rahmen 17 ausgebildet, der zum Erreichen des Betriebszustandes mit dem gegenüberliegenden Flansch 14, 13 formschlüssig zusammengeführt wird.
Das Gehäuse 10 der Austragseinrichtung 4 bildet zum Laderaum 3 hin einen Verbindungsraum, der zur Aufbereitung resp. zur Zerkleinerung des Guts benutzt wird und der etwa die Querschnittsform des Laderaums 3 der Wanne 2 aufweist, sodass ein stufenloser Übergang entsteht.

Mit dem Verbindungsraum resp. dem Innenraum, in dem eine rotierende Zerkleinerungsvorrichtung aus Schneid- und Räumwerkzeugen angeordnet ist, wie beispielsweise in CH 691788 A5 und CH 692593 A5 beschrieben, ist eine Auswurfvorrichtung 19 förderwirksam verbunden. Die Auswurfvorrichtung 19 weist ein am Umfang der Zerkleinerungsvorrichtung 18 angeordneter Schleuderrotor 20, der das von der Zerkleinerungsvorrichtung 18 vom zusammenhängenden Gut abgetrennte Verteil- resp. Streugut erfasst und durch einen Leitkanal 21 auswirft.

Der Schleuderrotor 20 ist mit einer nicht veranschaulichten Antriebswelle, vorzugsweise durch ein Riemenvorgelege, das durch eine abnehmbare Haube 22 geschützt ist, antriebsverbunden.

Die Auswurfvorrichtung 19 ist in Richtung des Doppelpfeils 23 entlang des Umfangs der Zerkleinerungsvorrichtung 18 verstellbar resp. einstellbar ausgebildet.

Bei einer von der Wanne 2 getrennten Position der Austragseinrichtung 4 kann diese durch eine nicht dargestellte Abstützvorrichtung zur Schonung des Scharniers 11 resp. der Flanschverbindung auf dem Boden abgestützt werden.

Die erwähnte alternative nicht erfindungsgemäß Ausführungsform, bei der die Austragseinrichtung 4 durch eine zur Fortbewegungsrichtung parallele Schiebebewegung von der Wanne 2 getrennt werden kann, basiert auf einer teleskopartigen Führungsanordnung von Rohren oder Trägern unterschiedlicher Querschnitte.

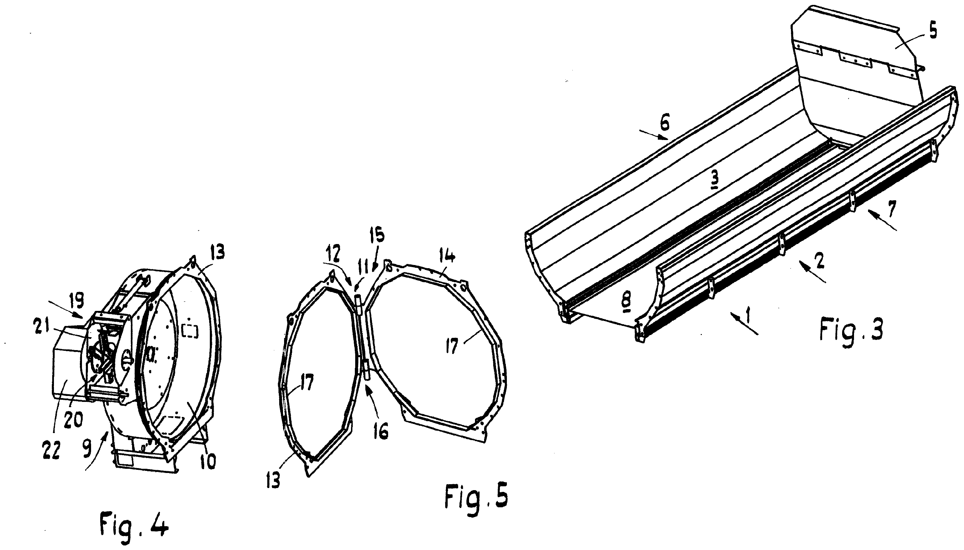

In den Fig. 3 bis 5 sind die wichtigsten Komponenten der Einrichtung 1 einzeln dargestellt, wie sie oben beschrieben und beispielsweise durch Schrauben und Muttern miteinander zu verbinden sind.

## Patentansprüche

1. Einrichtung (1) zur Verteilung von streufähigem Gut, insbesondere Mist, Kompost, Düngemittel oder Abfälle aus pflanzlichen Stoffen, bestehend aus einer auf einem Fahrgestell befestigbaren und einen Laderaum (3) für das Gut bildenden Wanne (2), die entlang eines Wannenbodens (8) eine das Gut gegen eine ein Ende des Laderaumes (3) bildende, seitlich aus der Wanne (2) fördernde Austragseinrichtung (4) schiebende Fördervorrichtung (5) aufweist, wobei die Austragseinrichtung (4) wenigstens eine dem Gut zur Aufbereitung zugewandte, umlaufend angetriebene Zerkleinerungsvorrichtung (18) und eine dieser nachgeschaltete, quer zur Fortbewegungsrichtung des Fahrgestells wirkende Auswurfvorrichtung (19) aufweist, **dadurch gekennzeichnet, dass** ein die Austragseinrichtung (4) tragendes Gestell (9) durch eine an der Seitenwand (6, 7) der Wanne um eine etwa senkrecht angeordnete Drehachse (12) schwenkbar von der Wanne (2) trennbar ausgebildet ist, wobei das Gestell (9) resp. das Gehäuse (10) einen angebauten Flansch (13) aufweist, der im Betriebszustand der Einrichtung (1) mit einem an dem Wannenende befestigten Gegenflansch (14) lösbar verbunden ist und der angebaute Flansch (13) und der Gegenflansch (14) durch ein die Drehachse (12) bildendes Scharnier (11) verbunden ist.

2. Einrichtung nach Anspruch 1, **dadurch gekennzeichnet, dass** das Gestell (9) als Gehäuse (10) der Austragseinrichtung (4) ausgebildet ist.

3. Einrichtung nach Anspruch 1 oder 2, **dadurch gekennzeichnet, dass** die Flanschen im Betriebszustand der Einrichtung (1) formschlüssig verbunden sind.

4. Einrichtung nach Anspruch 1 oder 2, **dadurch gekennzeichnet, dass** das Scharnier (11) an der Drehachse (12) wenigstens zwei beabstandete, aus Kloben und Drehband sowie Aufsteckwelle gebildete Drehlager (15, 16) aufweist.

5. Einrichtung nach einem der Ansprüche 1 bis 4, **dadurch gekennzeichnet, dass** das die Austragseinrichtung (4) tragende Gestell (9) mit der Wanne (2) form- und/oder kraftschlüssig verbunden ist.

6. Einrichtung nach Anspruch 5, **dadurch gekennzeichnet, dass** das Gehäuse (10) zum Laderaum (3) hin zwischen Zerkleinerungsvorrichtung (18) und Auswurfvorrichtung (19) einen Verbindungsraum und etwa die Querschnittsform des Laderaumes (3) aufweist.

7. Einrichtung nach Anspruch 6, **dadurch gekennzeichnet, dass** der Verbindungsraum mit der, vorzugsweise verstellbaren Auswurfvorrichtung (19) förderwirksam verbunden ist.

8. Einrichtung nach einem der Ansprüche 1 bis 7, **dadurch gekennzeichnet, dass** die in Ausserbetriebsposition oder für den Unterhalt von der Wanne (2) getrennte Austragseinrichtung (4) durch eine Stützvorrichtung auf dem Boden abstützbar ist.

## Claims

1. Device (1) for distributing spreadable material, in particular dung, compost, fertiliser or waste from plant matter, consisting of a trough (2) that can be secured to a chassis and forms a loading space (3) for the material, the trough being provided along its bottom (8) with a conveying device (5) pushing the material towards a discharge device (4) forming one end of the loading space (3) and conveying the material laterally out of the trough (2), wherein the discharge device (4) has at least one disintegrating device (18) driven in rotation and directed towards the material to be prepared and a downstream ejection device (19) acting transversely to the direction of movement of the chassis, **characterised in that** a frame (9) supporting the discharge device (4) is designed in such a manner that it can be separated from the trough (2) by being pivoted about a substantially vertically arranged axis of rotation (12) on the side wall (6, 7) of the trough, wherein the frame (9) or the housing (10) has an attached flange (13) detachably connected in the operating state of the device (1) to a counter flange (14) secured to the end of the trough and the attached flange (13) and the counter flange (14) are connected by a hinge (11) forming the axis of rotation (12).

2. Device according to claim 1, **characterised in that** the frame (9) is designed as the housing (10) of the discharge device (4).

3. Device according to claim 1 or claim 2, **characterised in that** the flanges are positively connected in the operating state of the device (1).

4. Device according to claim 1 or claim 2, **characterised in that** the hinge (11) on the axis of rotation (12) has at least two pivot bearings (15, 16) arranged at a distance from one another and formed of a pin and strap and a detachable shaft.

5. Device according to one of claims 1 to 4, **characterised in that** the frame (9) supporting the discharge device (4) is positively and/or non-positively connected to the trough (2).

6. Device according to claim 5, **characterised in that** the housing (10) is provided towards the loading space (3) between the disintegrating device (18) and the ejection device (19) with a connecting space having substantially the cross-sectional shape of the loading space (3).

7. Device according to claim 6, **characterised in that** the connecting space is connected to the preferably adjustable ejection device (19) for positive conveying.

8. Device according to one of claims 1 to 7, **characterised in that** the discharge device (4) separated from the trough (2) in the inoperative position or for maintenance can be supported on the ground by a supporting device.

## Revendications

1. Dispositif (1) pour la distribution de produits d'épandage, en particulier de fumier, d'engrais ou de déchets de matières végétales, se composant d'une cuve (2) pouvant être fixée sur un châssis roulant et formant une chambre de chargement (3) pour le produit, qui présente le long d'un fond de cuve (8) un dispositif de transport (5) poussant le produit contre un dispositif d'extraction (4) formant une extrémité de la chambre de chargement (3) et le transportant latéralement hors de la cuve (2), dans lequel le dispositif d'extraction (4) présente au moins un dispositif de broyage (18) entraîné en rotation tourné vers le produit pour sa préparation et un dispositif d'éjection (19) installé après celui-ci et agissant transversalement à la direction du mouvement de transport du châssis roulant, **caractérisé en ce qu'**un châssis (9) portant le dispositif d'extraction (4) est réalisé de façon séparable par pivotement de la cuve (2) au moyen d'un axe de rotation (12) disposé environ verticalement sur la paroi latérale (6, 7) de la cuve, dans lequel le châssis (9) respectivement le boîtier (10) présente une bride rapportée (13), qui dans l'état de fonctionnement du dispositif (1) est assemblée de façon séparable à une bride opposée (14) fixée à l'extrémité de cuve et la bride rapportée (13) et la bride opposée (14) sont reliées par une charnière (12) formant l'axe de rotation (12).

2. Dispositif selon la revendication 1, **caractérisé en ce que** le châssis (9) est formé par le boîtier (10) du dispositif d'extraction (4).

3. Dispositif selon une revendication 1 ou 2, **caractérisé en ce que** les brides sont assemblées par emboitement dans l'état de fonctionnement du dispositif (1) .

4. Dispositif selon une revendication 1 ou 2, **caractérisé en ce que** la charnière (11) présente sur l'axe de rotation (12) au moins deux paliers rotatifs espacés (15, 16), formés par des gonds et une bande tournante ainsi que par une broche.

5. Dispositif selon l'une quelconque des revendications 1 à 4, **caractérisé en ce que** le châssis (9) portant le dispositif d'extraction (4) est assemblé par emboîtement et/ou par adhérence à la cuve (2).

6. Dispositif selon la revendication 5, **caractérisé en ce que** le boîtier (10) présente en direction de la chambre de chargement (3) entre le dispositif de broyage (18) et le dispositif d'éjection (19) une chambre de liaison et environ la forme de la section transversale de la chambre de chargement (3).

7. Dispositif selon la revendication 6, **caractérisé en ce que** la chambre de liaison est reliée de façon active pour le transport au dispositif d'éjection (19), de préférence réglable.

8. Dispositif selon l'une quelconque des revendications 1 à 7, **caractérisé en ce que** le dispositif d'extraction (4) séparé de la cuve (3) dans une position hors service ou pour l'entretien peut être supporté sur le sol par un dispositif de support.
